# EUROPEAN PATENT APPLICATION

(11) **EP 4 428 305 A1**
(43) Date of publication of application: **11.09.2024**
(21) Application number: 23183861.6
(22) Date of filing: 06.07.2023
(51) Int. Cl.: E02D 23/16, E02D 27/52, F42D 1/00, F42D 1/08

(54) **UNDERWATER BLASTING CONSTRUCTION METHOD FOR EMBEDDED OPEN CAISSON DEEP WATER FOUNDATION**

(30) Priority: 03.03.2023 CN 202310200627
(71) Applicant: China Railway No.4 Engineering Group Co., Ltd., Hefei Anhui 230000 (CN); The Second Engineering Co., Ltd. of CTCE Group, Suzhou Jiangsu 215000 (CN)
(72) Inventor: Peng, Bo, Suzhou (CN); Li, Yonghai, Suzhou (CN); Wu, Xiaoquan, Suzhou (CN); Yang, Jiayi, Suzhou (CN); Yu, Xiuping, Suzhou (CN); Di, Peng, Suzhou (CN); Liang, Chao, Suzhou (CN); Han, Yonggang, Suzhou (CN); Chen, Wenyin, Suzhou (CN); Cen, Feng, Suzhou (CN); Wu, Junguo, Suzhou (CN); Ouyang, Shi, Suzhou (CN); He, Xiaodong, Suzhou (CN); Wei, Bohao, Suzhou (CN); Zhu, Jun, Suzhou (CN); Yang, Tao, Suzhou (CN); Niu, Caoyuan, Suzhou (CN)
(74) Representative: Zhang, Junjie

(57) **Abstract**

An underwater blasting construction method for embedded open caisson deep water foundation, including the following steps: determine a construction area; make and install a chain gravity anchor; tow the reef blasting ship to the construction area by using a tugboat; anchor the reef blasting ship; at least one anchor cable of the reef blasting ship is docked with a floating cable of the chain gravity anchor; sequentially carry out the steps of drilling, charging, blasting and slag cleaning in the first area, exposing the upper surface of a central rock platform; sequentially carry out the steps of drilling, charging, blasting and slag cleaning in the second area, exposing part of the side surface of the central rock platform and part of the surface of an outer side slope; sequentially carry out the steps of drilling, charging, blasting and slag cleaning in the third area, exposing the remaining side surface of the central rock platform, the remaining surface of the outer side slope and the surface of an annular groove; the steps of drilling, charging and blasting which are sequentially carried out in the first area, the second area and the third area are realized through the reef blasting ship; retract the chain gravity anchor by using the floating cable.

## Description

### Cross reference to related application

This application claims the priority of the Chinese application for patent No. 202310200627.0 filed on March 3, 2023 and entitled "underwater blasting construction method for embedded open caisson deep water foundation", the entire contents of which being incorporated herein by reference.

### Technical Field

This disclosure relates to the fields of deep water foundation construction for bridge, and in particular to an underwater blasting construction method for embedded open caisson deep water foundation.

### Background Art

Underwater drilling and blasting has high production efficiency, good blasting effect, and easy control of construction quality, making it a commonly used blasting method for underwater open caisson foundation construction. At present, the foundation construction of the underwater open caisson is rarely designed on a pit bottom platform, and the foundation construction is roughly and completely blasted and excavated without considering using the bearing capacity of rocks, so that the excavation amount is large, the cost is high, and the construction mode is very unreasonable. In addition, the drilling and blasting of underwater open caisson foundation mostly adopt a structure form of continuous charging, the damage degree of explosion shock waves generated by the charging mode to the bottom surface of the foundation pit is large, the flatness of the cross-section after blasting is poor, the construction condition of the subsequent process can be met only by mechanical chiseling, and the method is time-consuming, labor-consuming and financial-consuming.

### Summary of the Invention

In view of the shortcomings of the prior art, an object of the present specification is to provide an underwater blasting construction method for embedded open caisson deep water foundation, which can use a chain gravity anchor to stably anchor the reef blasting ship, can exert the bearing capacity of the substrate hard rock, reduce the amount of blasting rock and concrete pouring, save economic costs, and can form a flat blasting bottom surface.

In order to achieve the above purpose, the embodiment of the present specification provides an underwater blasting construction method for embedded open caisson deep water foundation, including the following steps:
Scan and measure underwater topography to determine a construction area; the construction area comprises a first area, a second area and a third area; the upper surfaces of the first area and the second area are the original seabed surface, the second area surrounds outside the first area, the bottom surface of the second area is lower than the bottom surface of the first area, and the third area is located below the second area;

Make a chain gravity anchor; the chain gravity anchor comprises a steel wire rope and a plurality of gravity anchors; the gravity anchor comprise a main body portion, an extension portion and a through hole penetrating through the extension portion along a first direction; in the first direction, two ends of the extension portion respectively protrude from two ends of the main body portion, and the total length of the extension portion protruding from the main body portion is longer than or equal to the length of the main body portion; in a second direction, two ends of the main body portion respectively protrude from two ends of the extension portion, the total length of the main body portion protruding from the extension portion is longer than or equal to the length of the extension portion, and the second direction is perpendicular to the first direction; the steel wire rope is sequentially threaded through the through holes of the gravity anchors, and the gravity anchors are connected through the steel wire rope;

Install the chain gravity anchor;

Tow the reef blasting ship to the construction area by using a tugboat;

Anchor the reef blasting ship; at least one anchor cable of the reef blasting ship is docked with a floating cable of the chain gravity anchor;

Sequentially carry out the steps of drilling, charging, blasting and slag cleaning in the first area, exposing the upper surface of a central rock platform;

Sequentially carry out the steps of drilling, charging, blasting and slag cleaning in the second area, exposing part of the side surface of the central rock platform and part of the surface of an outer side slope; the diameter of the central rock platform gradually increases from top to bottom, while the diameter of the outer side slope gradually decreases from top to bottom;

Sequentially carry out the steps of drilling, charging, blasting and slag cleaning in the third area, exposing the remaining side surface of the central rock platform, the remaining surface of the outer side slope and the surface of an annular groove; the inner ring of the annular groove is connected to the central rock platform, and the outer ring of the annular groove is connected to the outer side slope; when charging in the third area, setting an energy dissipation composite cushion layer at the bottom of a blasting hole; wherein the steps of drilling, charging and blasting which are sequentially carried out in the first area, the second area and the third area are realized through the reef blasting ship;

Retract the chain gravity anchor by using the floating cable.

As a preferred embodiment, between the step of making a chain gravity anchor and the step of installing the chain gravity anchor, it further comprises: calculate parameters; according to the coordinates of more than two control points provided by the design, collect and calculate the construction positioning parameters through RTK connecting a special handbook; check the coordinates of the control points, and after confirming that the coordinates are correct, the RTK can be put into the positioning construction of the reef blasting ship.

As a preferred embodiment, between the step of towing the reef blasting ship to the construction area by using a tugboat and the step of anchoring the reef blasting ship, it further comprises:
Install two RTK instruments at a fixed position of the reef blasting ship, measure relative coordinates of the fixed position, and calculate by using offshore construction positioning software to obtain real-time accurate position data of the reef blasting ship, wherein the accurate position data comprises water surface elevation;
Connect the two RTK instruments to a working computer, and the offshore construction positioning software can display the position of the reef blasting ship;
Import construction drawing coordinates to obtain the position information of the reef blasting ship and the construction drawing, so as to realize the accurate positioning of the reef blasting ship.

As a preferred embodiment, in the step of anchoring the reef blasting ship, four anchors are thrown outside the construction area to anchor the reef blasting ship according to the position information of the construction drawing; and the two anchors are thrown into a crossed figure-eight shape at each front and rear of the reef blasting ship, two naval anchors are used on the near shore side for anchoring, the naval anchors are sent to a first predetermined position for anchoring by an anchor boat, and two chain gravity anchors are used on the channel side for mooring.

As a preferred embodiment, the mass of the naval anchor is 3 tons and the mass of the chain gravity anchor is 40 tons.

As a preferred embodiment, the length of the horizontal projection of the anchor cable of each of the four anchors is 150m, and the angle of the cable of the four anchors is 45° to the centerline of the reef blasting ship.

As a preferred embodiment, the reef blasting ship is moved to a drilling position by twisting through an anchor machine, and the anchor cables of the four anchors are tightened to stabilize the reef blasting ship at the drilling position.

As a preferred embodiment, in the step of anchoring the reef blasting ship, an extending direction of a bow-stern line of the reef blasting ship is consistent with the direction of the tide.

As a preferred embodiment, in the step of installing the chain gravity anchor, the chain gravity anchor is lifted to a designated coordinate position of the construction area for installation by using a 100T floating crane vessel.

As a preferred embodiment, the chain gravity anchor has at least two hanging rings, the floating crane vessel hooks one of the hanging ring to slowly lower the chain gravity anchor to a second predetermined position, the other one of the hanging ring fixes the floating cable and is slowly lowered in cooperation with the floating crane vessel, and is finally placed at the second predetermined position; the other end of the floating cable is tied to a floating tube.

Advantages of this disclosure exist in that:
The embodiment provides an underwater blasting construction method for embedded open caisson deep water foundation, in which the steps of drilling, charging and blasting in a construction area are realized through the reef blasting ship, and the reef blasting ship is anchored by arranging a special chain gravity anchor. The chain gravity anchor comprises a plurality of gravity anchors, so that the contact area between the gravity anchor and the river bed can be increased, the friction between the gravity anchor and the river bed can be increased, and the gravity anchor is effectively prevented from drifting. In addition, the main body portion and the extension portion of the gravity anchor meet the corresponding structural design, which can make the single gravity anchor provide good anchoring effect, and at the same time can facilitate the steel wire rope penetration in the through hole to connect a plurality of gravity anchors into the chain gravity anchor, so that the chain gravity anchor as a whole has good anchoring effect, and thus can anchor the reef blasting ship well.

By blasting in the center area of the open caisson foundation to form the center rock platform, the bearing capacity of the substrate hard rock can be fully utilized, which greatly reduces the amount of blasting rock and concrete pouring and saves economic costs. In addition, the side of the central rock platform and the outer side slope form an inverted trapezoidal structure space, which enlarges the water flow section and slows down the water flow, greatly reducing the impact of water scouring on the open caisson structure, and at the same time, the enlarged structure space makes it more convenient for the subsequent slag cleaning.

In addition, the embodiment adopts the means of blasting in different areas and times, and when charging in the third area, using an energy dissipation composite cushion layer, which can effectively reduce the damage of explosion shock waves to the rock layer at the bottom of the pit, and can form a flatter blasting bottom compared with the general continuous charging structure, which is convenient for the subsequent lowering and leveling of the open caisson construction, and speed up the connection of processes.

### Brief Description of the Drawings

FIG 1 is a flow diagram of steps of an underwater blasting construction method for embedded open caisson deep water foundation provided in the embodiment;
FIG 2 is a schematic diagram of the distribution of a construction area provided in the embodiment, which is the main view;
FIG 3 is a plan view of the layout of the drilling hole of the first area provided in the embodiment, which is a top view;
FIG 4 is a plan view of the layout of the drilling hole of the second area and the third area provided in the embodiment, which is a top view;
FIG 5 is a schematic diagram of a structure of a continuous charging structure in a blasting hole provided in the embodiment;
FIG 6 is a schematic diagram of a structure of a continuous charging structure of an energy dissipation composite cushion layer in a blasting hole provided in the embodiment;
FIG 7 is a flow diagram of the blasting construction provided in the embodiment;
FIG 8 is a flow diagram of the slag cleaning operation provided in the embodiment;
FIG 9 is a top view of the slag cleaning vessel and barge in FIG 8 during operation;
FIG 10 is a schematic diagram of a structure of a chain gravity anchor provided in the embodiment;
FIG 11 is a schematic diagram of a structure of a gravity anchor provided in the embodiment;
FIG 12 is a schematic diagram of a three-dimensional structure of another gravity anchor provided in the embodiment;
FIG 13 is a schematic diagram of a three-dimensional structure in another view of FIG 12;
FIG 14 is a schematic diagram of the reef blasting ship after anchoring in step S600;
FIG 15 is a schematic diagram of a chain gravity anchor when it is thrown in step S400.

Brief description of the markers in the drawings:
1: the original seabed surface; 2: the blasting hole; 3: the central rock platform; 4: the annular groove; 5: the outer side slope; 6: the pre-splitting hole; 7: the top contour line of the central rock platform; 8: the bottom contour line of the central rock platform; 9: the bottom contour line of the outer side slope; 10: the top contour line of the outer side slope; 11: the detonating cord; 12: the blocking object; 13: the explosive roll; 14: the detonating tube; 15: the energy dissipation iron ball; 16: the buffer cushion layer; 17: the water surface; 18: the drilling and blasting ship; 19: the detonating ship; 20: the slag cleaning boat; 21: the first area; 22: the second area; 23: the third area; 24: the barge; "a": the distance between two adjacent blasting holes; "b": the row distance between two rows of blasting holes; 25: the reef blasting ship; 26: the near shore side; 27: the channel side; 28: the naval anchor; 29: the floating tube; 30: the underwater ground; 40: the floating crane vessel;
100: the chain gravity anchor; 31: the gravity anchor; 311: the main body portion; 312: the extension portion; 313: the through hole; 314: the concave structure; 141: the ends of the concave structure; 142: the bottom of the concave structure; 315: the transition structure; 316: the chamfer; 32: the steel wire rope; 33: the hanging ring; 34: the floating cable;
X: the first direction; Y: the second direction; Z: the third direction; F: the direction of the tide.

### Detailed Description of the Invention

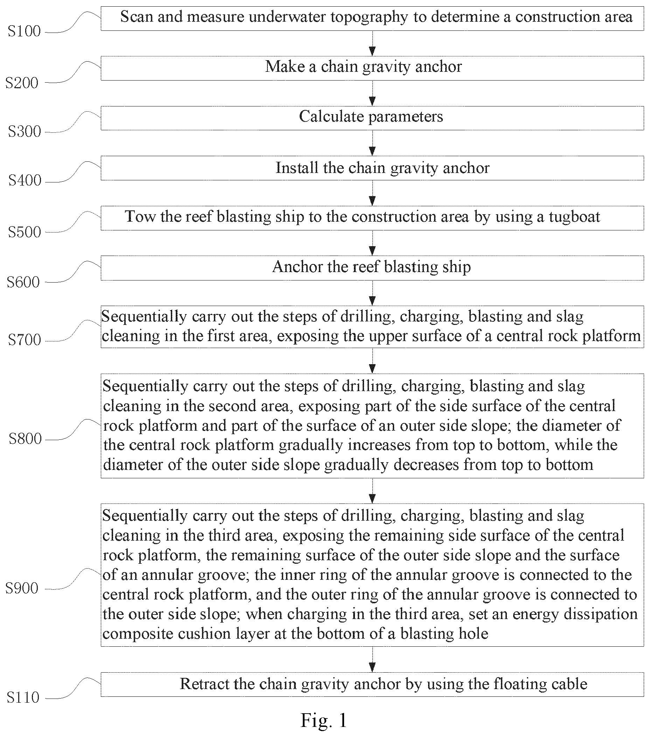

Referring to FIG 1, the embodiment provides an underwater blasting construction method for embedded open caisson deep water foundation, including the following steps:
Step S100: Scan and measure underwater topography to determine a construction area.

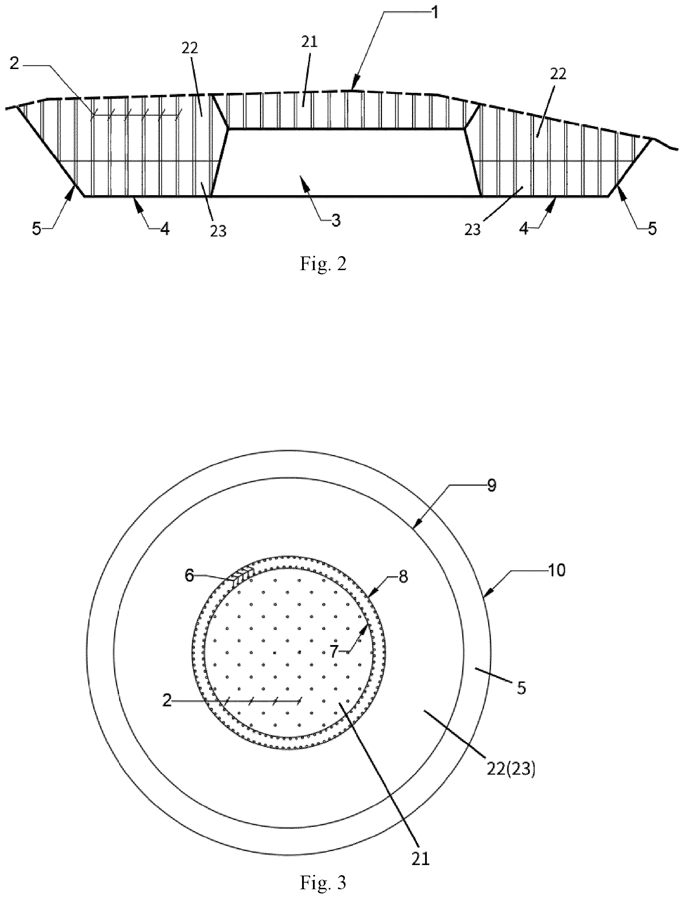

Wherein, as shown in FIG 2, the construction area comprises a first area 21, a second area 22 and a third area 23. The upper surfaces of the first area 21 and the second area 22 are the original seabed surface 1, the second area 22 surrounds outside the first area 21, the bottom surface of the second area 22 is lower than the bottom surface of the first area 21, and the third area 23 is located below the second area 22.

In step S100, the underwater topography can be measured by adopting methods such as RTK-DGPS, multi-beam, side-scan sonar and the like. Specifically, use RTK-DGPS and a depth finder to measure and collect the topography of the original seabed of the blasting area, and obtain the plane position and the elevation of the construction area of the open caisson deep water foundation.

Step S200: Make a chain gravity anchor 100.

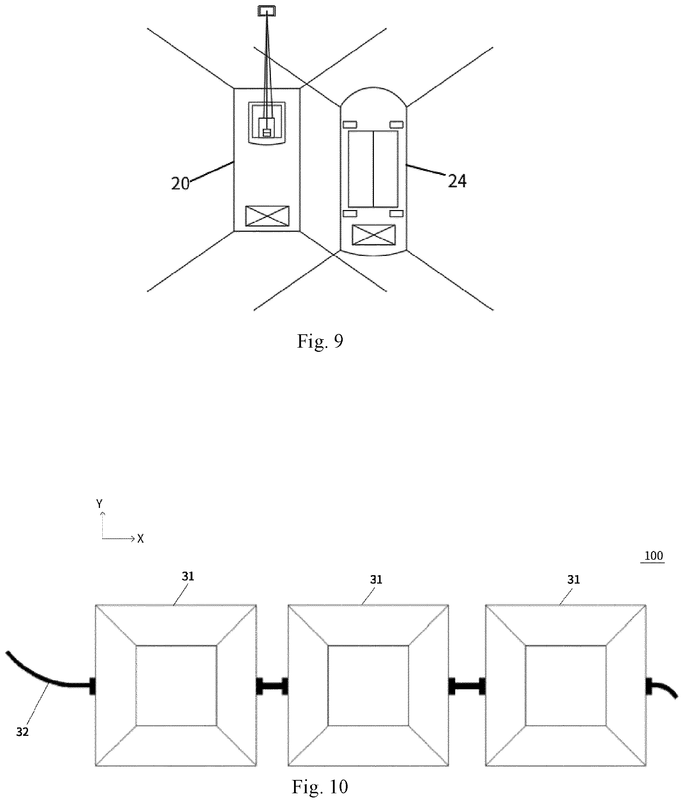

Wherein, as shown in FIG 10 to FIG 13, the chain gravity anchor 100 comprises a steel wire rope 32 and a plurality of gravity anchors 31. The gravity anchor 31 comprise a main body portion 311, an extension portion 312 and a through hole 313 penetrating through the extension portion 312 along a first direction X. In the first direction X, two ends of the extension portion 312 respectively protrude from two ends of the main body portion 311, and the total length of the extension portion 312 protruding from the main body portion 311 is longer than or equal to the length of the main body portion 311. In a second direction Y, two ends of the main body portion 311 respectively protrude from two ends of the extension portion 312, the total length of the main body portion 311 protruding from the extension portion 312 is longer than or equal to the length of the extension portion 312. The second direction Y is perpendicular to the first direction X. As shown in FIG 10, the steel wire rope 32 is sequentially threaded through the through holes 313 of the gravity anchors 31. The gravity anchors 31 are connected through the steel wire rope 32.

The chain gravity anchor 100 provided in the embodiment comprises a plurality of gravity anchors 31, so that the contact area between the chain gravity anchor 100 and the river bed can be increased, the friction between the chain gravity anchor 100 and the river bed can be increased, and the chain gravity anchor 100 is effectively prevented from drifting. In addition, the main body portion 311 and the extension portion 312 of the gravity anchor 31 meet the corresponding structural design, which can make the single gravity anchor 31 provide good anchoring effect, and at the same time can facilitate the steel wire rope 32 penetration in the through hole 313 to connect a plurality of gravity anchors 31 into the chain gravity anchor 100, so that the chain gravity anchor 100 as a whole has good anchoring effect, and thus can anchor the reef blasting ship well.

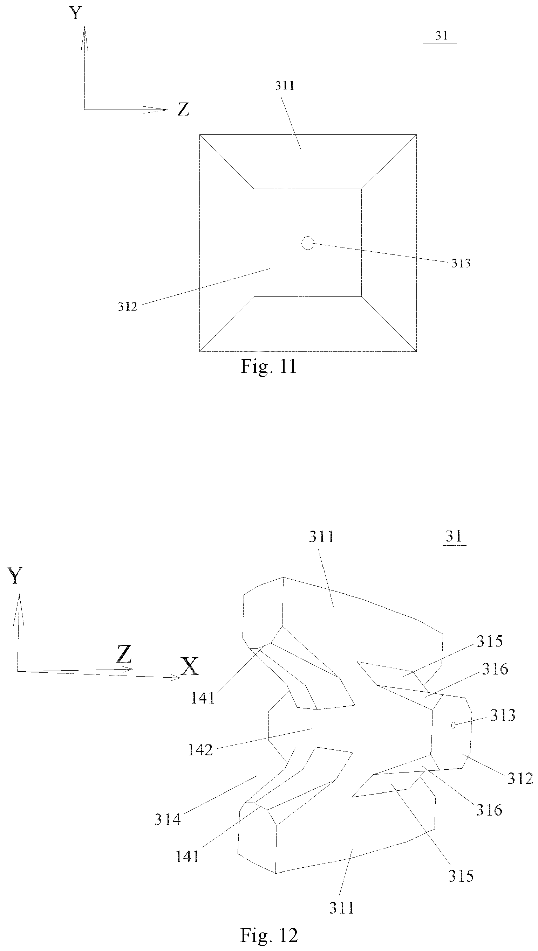

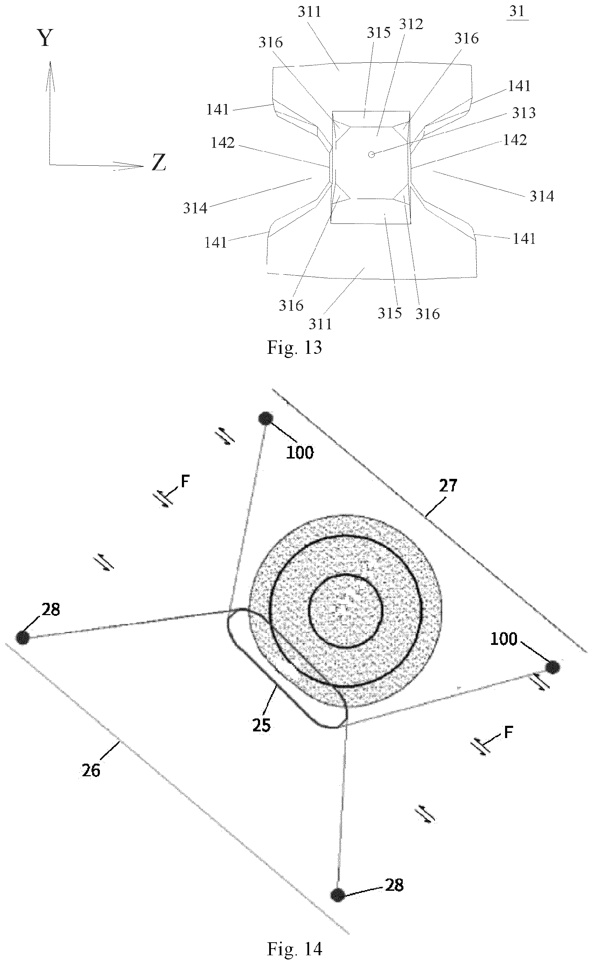

In an embodiment, as shown in FIG 12 and FIG 13, the lengths of the two ends of the extension portion 312 protruding from the two ends of the main body portion 311 are equal, and are both equal to the length of the main body portion 311. In the first direction X, the length of the main body 311 accounts for one-third of the total length of the gravity anchor 31.

Further, in the second direction Y, the lengths of the two ends of the main body portion 311 protruding from the two ends of the extension portion 312 are equal, and are both equal to the length of the extension portion 312. In the second direction Y, the length of the extension portion 312 accounts for one-third of the total length of the gravity anchor 31.

Preferably, the length of the gravity anchor 31 in the first direction X is equal to the length in the second direction Y More preferably, the length of the gravity anchor 31 in a third direction Z is equal to the length in the first direction X. The third direction Z is respectively perpendicular to the first direction X and the second direction Y. That is, the total length of the gravity anchors 31 in the first direction X, the total length in the second direction Y, and the total length in the third direction Z are all equal, so that the structure of the single gravity anchor 31 can be more stable.

In an embodiment, the length of the gravity anchor 31 in the first direction X, the second direction Y, or the third direction Z is 1.5 to 2 meters.

In other embodiments, as shown in FIG 11, in the first direction X, the sum of the lengths of the two ends of the extension portion 312 protruding from the two ends of the main body portion 311 is equal to the length of the main body portion 311. In the second direction Y, the sum of the lengths of the two ends of the main body portion 311 protruding from the two ends of the extension portion 312 is equal to the length of the extension portion 312.

As shown in FIG 13, the main body portion 311 is equipped with two concave structures 314 symmetrically distributed in the third direction Z. The two ends 141 of the concave structures 314 are respectively connected to the sides of the main body portion 311, and the bottom 142 of the concave structures 314 is connected to the extension portion 312. The concave structure 314 is generally semi-circular in shape, which can further optimize the structure of the gravity anchor 31.

One end of the main body portion 311 in the second direction Y is used to contact the river bed, and thus both ends of the main body portion 311 in the second direction Y are provided with a substantially flat bottom structure. The combination of the flat bottom structure and the concave structure 314 can balance the relationship between the stress of the steel wire rope 32 at the intersection of the main body portion 311 and the extension portion 312 and the anchoring effect, and ensure that the steel wire rope 32 effectively connects all the gravity anchors 31 and simultaneously enables the single gravity anchor 31 to obtain better anchoring effect.

Preferably, in the third direction Z, the length of the concave structure 314 is equal to the length of the extension portion 312.

In an embodiment, as shown in FIG 11, the through hole 313 is located at the center of the extension portion 312. In other embodiments, as shown in FIG 12 and FIG 13, the through hole 313 can be located at a position above the center of the extension portion 312. The up-down direction is the second direction Y

In the embodiment, the gravity anchor 31 is made of C30 concrete. The number of the gravity anchors 31 can be three, and the mass of the gravity anchors 31 is 10-15 tons. Specifically, the length of the gravity anchor 31 in the first direction X, the second direction Y or the third direction Z is 1.78 meters, the mass of a single gravity anchor 31 is 13.54 tons, and the mass of the chain gravity anchor 100 is about 40 tons. It should be noted that the chain gravity anchor 100 in the embodiment of the present application is formed by connecting a plurality of gravity anchors 31 in series.

In the embodiment, as shown in FIG 12 and FIG 13, a transition structure 315 can be provided at the intersection of the main body portion 311 and the extension portion 312, so as to ensure that the main body portion 311 and the extension portion 312 are smoothly combined. In addition, in the first direction X, a chamfer 316 can be provided between one end of the extension portion 312 and the transition structure 315. A chamfer 316 can also be provided on the surface of the concave structure 314 to provide a smoother overall structure. It should be noted that the main body portion 311 and the extension portion 312 are integrally formed.

Step S300: Calculate parameters.

According to the coordinates of more than two control points provided by the design, collect and calculate the construction positioning parameters through RTK (Real-time kinematic) connecting a special handbook (usually using four-parameter calculation). After calculating the parameters, check the coordinates of the control points, and after confirming that the coordinates are correct, the RTK can be put into the positioning construction of the reef blasting ship 25.

Step S400: Install the chain gravity anchor 100.

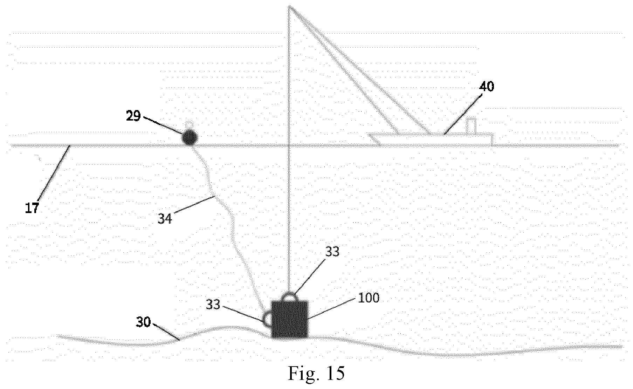

In step S400, use a 100T floating crane vessel 40 to lift the chain gravity anchor 100 to the designated coordinate position of the construction area for installation. The weight of the chain gravity anchor 100 is 40 tons. According to the construction requirements, the floating crane vessel 40 is precisely positioned in the same manner as the reef blasting ship 25, and the reef blasting ship 25 is positioned in a manner described in detail below. The chain gravity anchor 100 has at least two hanging rings 33. The floating crane vessel 40 hooks one of the hanging ring 33 to slowly lower the chain gravity anchor 100 to a second predetermined position, the other one of the hanging ring 33 fixes the floating cable 34 and is slowly lowered in cooperation with the floating crane vessel 40, and is finally placed at the second predetermined position of the underwater ground 30, as shown in FIG 15. The other end of the floating cable 34 is tied to a floating tube 29. During drilling and blasting operations, connect the anchor cable of the reef blasting ship 25 with the floating cable 34 of the chain gravity anchor 100; after the project is completed, the floating crane vessel 40 lifts and withdraws the chain gravity anchor 100 by using the floating cable 34, as detailed in step S110 below.

Wherein, the sinking position of the chain gravity anchor 100 must not cross the boundary of the channel to prevent the influence on the passing ships in the channel.

Step S500: Tow the reef blasting ship 25 to the construction area by using a tugboat.

The reef blasting ship 25 is used for drilling, charging, blasting in the construction area, as detailed below. Since the reef blasting ship 25 is a non-self-propelled engineering vessel, a tugboat is provided to tow it to the construction area.

Step S600: Anchor the reef blasting ship 25.

At least one anchor cable of the reef blasting ship 25 is docked with a floating cable 34 of the chain gravity anchor 100, so that the chain gravity anchor 100 can reliably anchor the reef blasting ship 25.

In the embodiment, between step S500 and step S600, the following steps can also be included:
Step S101: Install two RTK instruments at a fixed position of the reef blasting ship 25, measure the relative coordinates of the fixed position, and calculate by using offshore construction positioning software to obtain real-time accurate position data of the reef blasting ship 25, wherein the accurate position data comprises water surface elevation;
Step S102: Connect the two RTK instruments to a working computer, and the offshore construction positioning software can display the position of the reef blasting ship 25;
Step S103: Import the construction drawing coordinates to obtain the position information of the reef blasting ship 25 and the construction drawing, so as to realize the accurate positioning of the reef blasting ship 25.

Through the above steps S101 to S103, accurate positioning of the reef blasting ship 25 can be achieved.

In step S600, as shown in FIG 14, an extending direction of a bow-stem line of the reef blasting ship 25 is consistent with the direction F of the tide. Step S600 can specifically include anchoring the reef blasting ship 25 by throwing four anchors outside the construction area to according to the position information of the construction drawing.

The two anchors are thrown into a crossed figure-eight shape at each front and rear of the reef blasting ship 25. Two naval anchors 28 are used on the near shore side 26 for anchoring, the naval anchors 28 are sent to a first predetermined position for anchoring by an anchor boat. Two chain gravity anchors 100 are used on the channel side 27 for mooring. The mass of the naval anchor 28 can be 3 tons.

Specifically, the length of the horizontal projection of the anchor cable of each of the four anchors is 150m. In other embodiments, the length can be adjusted appropriately based on the anchor holding capacity of the seabed surface. The angle of the cable of the four anchors is 45° to the centerline of the reef blasting ship 25.

After step S600, the reef blasting ship 25 can be moved to a predetermined row of drilling position by twisting through an anchor machine, and the anchor cables of the four anchors are tightened to stabilize the reef blasting ship 25 at the drilling position. The reef blasting ship 25 can prepare an additional 500-meter steel cable and a 3-ton anchor, which can be replaced in a timely manner while ensuring that the steel wire breaks or the anchor is lost.

Before step S700, the stability of reef blasting ship 25 can also be checked. Specifically, to check the stability and the wave resistance of the reef blasting ship 25, the mooring motion response calculation can be performed by using hydrodynamic analysis software ANSYS-AQWA based on the floating body hydrodynamic performance calculation theory. The calculation modules involved include AQWA-LINE and AQWADRIFT modules. When calculating, the first step is to establish a hydrodynamic calculation model of reef blasting ship 25 through ANSYS software. The model is imported into AQWA-LINE to set the parameters of the reef blasting ship 25, hydrodynamic parameters, wave direction, frequency and other wave parameters for frequency domain calculation. When using AQWADRIFT for time domain calculation, obtain the motion response and cable tension response results of the reef blasting ship 25 by calling the calculation results of AQWA-LINE and setting parameters such as mooring cable parameters, calculation time, step length, wave and flow coefficients, etc.

In a specific embodiment, according to the mooring calculation results, the construction sea area is classified as a secondary level sea state with deep water and rapid currents. Comprehensively considering the meteorological conditions of the construction sea area and the mooring stability of the reef blasting ship 25, and the construction operation conditions of the reef blasting ship 25 must meet the following requirements: meteorological forecast level 7 or below, north wind level 6 or below, ocean current flow speed not exceeding 2.5m/s, wave height not exceeding 1.5m, and visibility above 100m, so that the safety of subsequent drilling and blasting operation is ensured.

Step S700: Sequentially carry out the steps of drilling, charging, blasting and slag cleaning in the first area 21, exposing the upper surface of a central rock platform 3. That is, the first area 21 extends downward to the upper surface of the center rock platform 3.

Step S800: Sequentially carry out the steps of drilling, charging, blasting and slag cleaning in the second area 22, exposing part of the side surface of the central rock platform 3 and part of the surface of an outer side slope 5; the diameter of the central rock platform 3 gradually increases from top to bottom, while the diameter of the outer side slope 5 gradually decreases from top to bottom.

Step S900: Sequentially carry out the steps of drilling, charging, blasting and slag cleaning in the third area 23, exposing the remaining side surface of the central rock platform 3, the remaining surface of the outer side slope 5 and the surface of an annular groove 4; the inner ring of the annular groove 4 is connected to the central rock platform 3, and the outer ring of the annular groove 4 is connected to the outer side slope 5; when charging in the third area 23, set an energy dissipation composite cushion layer at the bottom of a blasting hole 2, so that the substrate can be better protected and the damage caused by blasting energy to the bottom plate can be reduced during blasting in the third area 23.

Wherein, the steps of drilling, charging and blasting which are sequentially carried out in the first area 21, the second area 22 and the third area 23 are realized through the reef blasting ship 25.

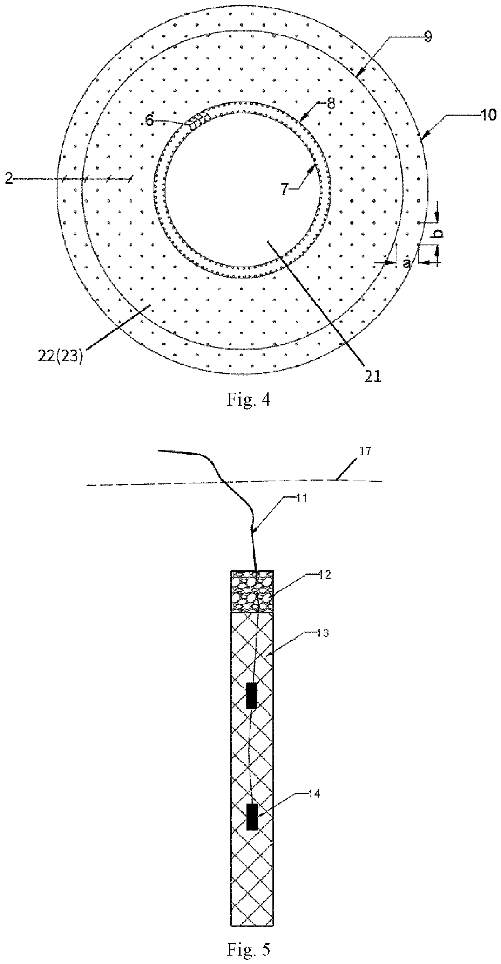

In the embodiment, specifically, in step S700 and step S800, when charging in the first area 21 and the second area 22, as shown in FIG 5, a continuous charging structure is used in the blasting hole 2 to fully exert the effect of the explosion shock wave. Wherein, the explosive roll 13 adopts water gel explosives that are resistant to water pressure, and the diameter of the explosive is 10-20mm smaller than the diameter of the blasting hole 2. The detonating tube 14 is placed near the bottom of the hole and near the top of the hole in the blasting hole 2. The explosive roll 13 is connected in series and tied to the detonating cord 11. During charging, a feeding rod is used to press the top of the explosive, pull the explosive lifting rope, and slowly feed it into the hole through a sleeve to make the bottom of the explosive come into contact with the bottom of the hole. The explosive is filled to a position about 1m away from the hole-opening, and blocked with a blocking object 12 to ensure that the explosive is prevented from floating. One end of the detonating cord 11 is located above the water surface 17.

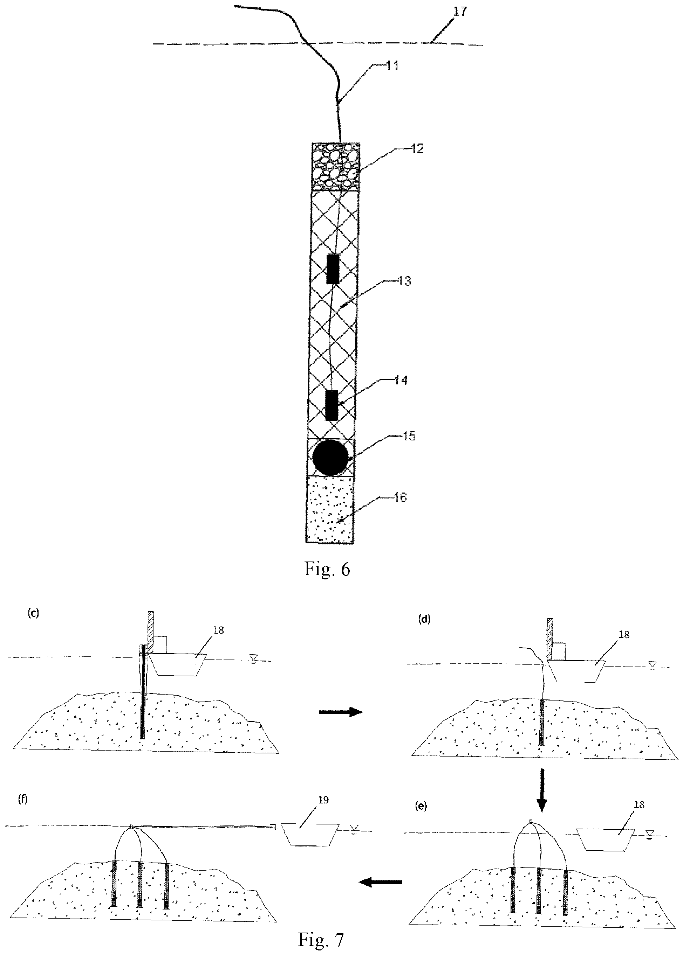

In step S900, when charging in the third area 23, as shown in FIG 6, an energy dissipation composite cushion layer continuous charging structure is used in the blasting hole 2. Furthermore, the steps of using the energy dissipation composite cushion layer continuous charging structure include: first evenly laying a loose or fine sand buffer cushion layer 16 at the bottom of the hole, then slowly placing an energy dissipation iron ball 15 on the buffer cushion layer 16 by using a rope, and then using a continuous charging structure to distribute explosives. Wherein, the thickness of buffer cushion layer 16 can be about 20cm, and the diameter of energy dissipation iron ball 15 can be between 110mm and 120mm. The energy dissipation iron ball 15 can reflect the explosion shock wave propagated vertically in the horizontal direction, to enhance the rock fragmentation effect between adjacent blasting holes. The buffer cushion layer 16 can absorb transmitted stress waves and reduce the damage to the pit bottom caused by blasting. The energy dissipation composite cushion layer continuous charging structure can help to form a flat blasting bottom, facilitating the landing and placement of the open caisson during construction, and reducing the adjustment time of the open caisson.

The above explosives can be water gel explosives that are resistant to water pressure. When charging, a feeding rod is used to press the top of the package, pull the package lifting rope, and slowly feed it into the hole through a sleeve to make the bottom of the package come into contact with the bottom of the hole. The explosive is filled to a position about 1m away from the hole opening, and blocked with blocking objects 12 such as coarse sand or crushed stones with a particle size of less than 10mm, etc.

In this embodiment, as shown in FIG 2, the center rock platform 3, the annular groove 4 and the outer side slope 5 form an open caisson deep water foundation together, so that the bearing capacity of the substrate hard rock can be fully utilized, the blasting excavation amount can be reduced, and the construction progress can be accelerated. Specifically, the center rock platform 3 is in a shape of a circular truncated cone. The size of the center rock platform 3 can be determined according to the structural size design of the open caisson, and the slope rate of the side surface of the center rock platform 3 and the slope rate of the outer side slope 5 are determined according to the rock type, the rock weathering degree and the excavation depth.

In a specific embodiment, the height of the center rock platform 3 is 8m, the slope rate of the side surface the center rock platform 3 is 4: 1, the diameter of the upper surface of the center rock platform 3 is 28m, and the diameter of the lower surface of the center rock platform 3 is 32m. The lower surface of the central rock platform 3 has a diameter margin of 4m to reserve space for lowering the open caisson. The radius of the outer ring of the annular groove 4 is 15m larger than that of the inner ring, and the bottom plate of the annular groove 4 is required to be flat and solid so as to be convenient for placing the open caisson. The outer side slope 5 is used as a permanent structure outside the rock platform, and the slope rate is 4:3. Broken stone backfilling is adopted between the open caisson foundation and the outer side slope 5.

In the present embodiment, the height of the third area 23 is 4m, that is, the second area 22 is blasted to a position 4m from the pit bottom, leaving a bottom plate protection layer of 4m as the third area 23. The diameters of the blasting holes 2 in the first area 21 and the second area 22 are equal and are both larger than the diameter of the blasting holes 2 in the third area 23. The spacing of the blasting holes 2 in the first area 21 is larger than the spacing of the blasting holes 2 in the second area 22, and the spacing of the blasting holes 2 in the second area 22 is larger than the spacing of the blasting holes 2 in the third area 23.

Specifically, the first area 21 and the second area 22 are blasted in a continuous charging structure, and the diameters of the blasting holes 2 are 138mm, and the blasting holes 2 are uniformly distributed at intervals as shown in FIG 3 and FIG 4. The third area 23 adopts an energy dissipation blasting charge structure to reduce the damage of blasting energy to the bottom plate, and simultaneously forms a relatively flat bottom surface, and the diameters of the blasting holes 2 are 115mm, and the blasting holes 2 are uniformly distributed at intervals as shown in FIG 4. In the first area 21, the second area 22 and the third area 23, two adjacent rows of blasting holes 2 are staggered, and two rows of blasting holes 2 spaced from one row of blasting holes 2 are aligned. As shown in FIG 4, the distance between two adjacent blasting holes 2 in the same row is "a", the row distance between two rows of blasting holes 2 spaced from one row of blasting holes 2 is "b", and the values of "a" and "b" are equal. In the first area 21, the values of "a" and "b" are 2.5m; in the second area 22, the values of "a" and "b" are 2.0m; in the third area 23, the values of "a" and "b" are 1.0m.

Wherein, the first area 21 is blasted starting from a position with a lower terrain elevation (namely the channel side 27) to open a blasting gap, form a pulling groove, increase a free surface, and then gradually expand until the blasting of all the circular foundation pits is completed. According to the different elevation control of the first area 21 and the second area 22, the blasting range is gradually expanded in the direction of advancing from the channel side 27 to the shore side. In an embodiment, after all blasting is completed in the first area 21 and the second area 22, slag cleaning is carried out, followed by blasting in the third area 23 and substrate slag cleaning.

In order to reduce the damage of surrounding blasting to central rock platform 3 and ensure the formation of central rock platform 3, when drilling in the first area 21, two circles of pre-splitting holes 6 are set on the periphery of central rock platform 3, and blasting holes 2 are set in the area surrounded by the circle of pre-splitting holes 6 located in the inner circle. On the projection of the horizontal plane, as shown in FIG 3, one circle of the pre-splitting holes 6 is located outside the outer contour of the upper surface of the central rock platform 3, and the other circle of the pre-splitting holes 6 is located inside the outer contour of the lower surface of the central rock platform 3. That is, one circle of the pre-splitting holes 6 is located on the outer side of the top contour line 7 of the central rock platform 3, and the other circle of the pre-splitting holes 6 is located on the inner side of the bottom contour line 8 of the central rock platform 3. FIG 3 and FIG 4 also show the bottom contour line 9 of the outer side slope 5 and the top contour line 10 of the outer side slope 5.

The diameter of the pre-splitting hole 6 can be 115mm, with a hole spacing of 1m. The pre-splitting hole 6 can effectively reduce the impact damage of blasting on central rock platform 3, control the regular division of central rock platform 3 from surrounding rocks, and simultaneously form a relatively flat slope.

Furthermore, when drilling in the second area 22, two circles of blasting holes 2 are reserved on the periphery of the central rock platform 3 as a post-construction area. The steps of drilling, charging, blasting and slag cleaning are sequentially performed on the second area 22 outside the post-construction area, and the steps of drilling, charging, blasting and slag cleaning are sequentially performed on the post-construction area. That is, during the construction of the second area 22, drilling and blasting are firstly carried out from the periphery to the inner direction, At the position of two rows of blasting holes 2 away from the central rock platform 3, blasting construction is stopped and slag cleaning work is carried out. After the completion of slag cleaning, drilling and blasting construction can be carried out on the remaining two rows of holes around central rock platform 3, which can form a good free surface, reduce the reaction force on central rock platform 3, increase the half hole rate of the surrounding holes of central rock platform 3, and ensure the integrity of central rock platform 3.

In steps S700, S800, and S900, before the drilling step, the positioning of the drilling and blasting ship 18 can be carried out. The plane position of the drilling and blasting ship 18 can be accurately controlled through the RTK positioning system, and the two anchors are thrown into a crossed figure-eight shape at each front and rear of the drilling and blasting ship 18 and then are fixed. Wherein, each anchor weighs 6T, and the length of the anchor cable entering the sea is 150m. The length of the anchor cable entering the sea can be adjusted appropriately based on the anchor holding capacity of the seabed surface. The channel side 27 adopts a sinking chain type, and the movement of the ship is completed by the stranded cable.

In steps S700, S800, and S900, during the drilling step, the drill machine runs sleeves and drill pipes at the location where drilling is required, and conducts drilling the blasting holes 2 underwater in different areas. As shown in FIG 7(c), after positioning the drilling and blasting ship 18, the drilling machine moves to the designed hole-position on the track, lowers the sleeve, and adjusts the position of the drilling machine appropriately after the sleeve placed at the bottom of the water to reduce the deviation of the position of the hole-opening. The drilling adopts the form of vertical drilling.

In steps S700, S800, and S900, in the charging step, the layering depth is reached and make sure there is no residue in the hole before charging. After each drilling, check the drilling depth and remove all sediment and debris from the hole before charging. The schematic diagram of charging is shown in FIG 7(d).

In steps S700, S800, and S900, after the step of charging, connect the initiating circuit as shown in FIG 7(e) and perform the blasting operation as shown in FIG 7(f). Initiate the circuit by adopting the inter-hole delay of a non-electric millisecond difference detonating tube 14. Load two sub detonating tubes in each blasting hole 2. Connect each sub detonating tube to a main detonating tube. The main detonating tube is connected in series with several sub detonating tubes to the detonator according to its length requirement. The drilling and blasting ship 18 moves to a safe distance of 100m away. After confirming safety, a blasting notice is issued, and the detonating ship 19 whistles to detonate. This embodiment adopts millisecond delay blasting, and the rear-row explosive can fully utilize the free surface formed by the front-row explosive in advance blasting, and the safety and reliability of detonation are improved.

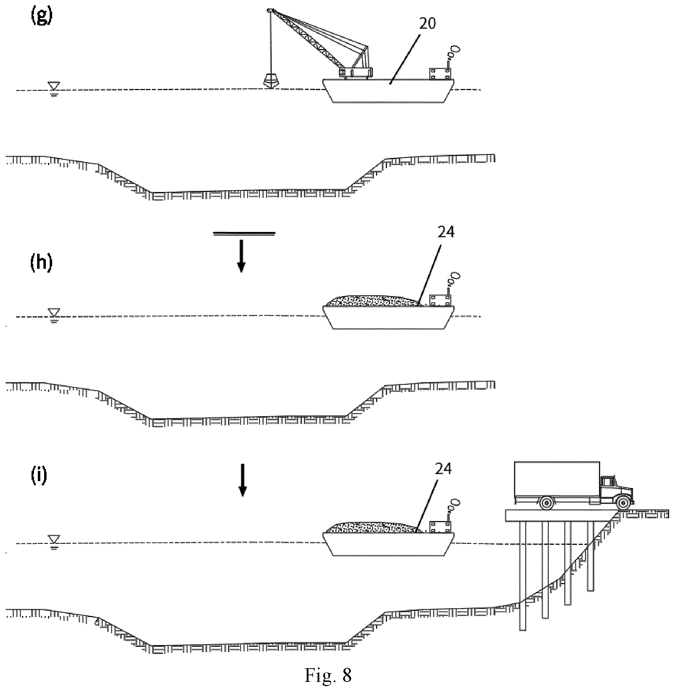

In steps S700, S800, and S900, after the step of blasting is carried out, as shown in FIG 8 and FIG 9, a slag cleaning boat 20 with plum blossom grabs is used to excavate the large stones in the foundation pit, and a high-power sand suction boat is used to remove the remaining debris.

Specifically, after the completion of blasting in different areas and times each time, as shown in FIG 8(g), the slag cleaning boat 20 is used to remove the blasting slag in the foundation pit. The guide method, GPS and total station are used to locate the slag cleaning boat 20. First, the slag cleaning boat 20 with plum blossom grabs is used to dig out the large stones in the foundation pit, and then the high-power sand suction boat is used to absorb the residual debris. As shown in FIG 8(h), the barge 24 is engaged in slag transportation operations. As shown in FIG 8(i), the barge 24 is engaged in slag disposal operations. The top view of the operation of the slag cleaning boat 20 and the barge 24 is shown in FIG 9.

Wherein, the standards for foundation pit cleaning are: (1) no large stones are in the slag-excavating grab of the slag cleaning boat 20; (2) no obvious debris is discharged during the sand suction vessel cleaning; (3) Using methods such as RTK-DGPS, multi beam, and side scan sonar to measure underwater topography, verify that the plane size and elevation of the foundation pit meet the design requirements.

Step S 110: Retract the chain gravity anchor 100 by using the floating cable 34.

The embodiment provides an underwater blasting construction method for embedded open caisson deep water foundation, in which the steps of drilling, charging and blasting in a construction area are realized through the reef blasting ship 25, and the reef blasting ship 25 is anchored by arranging a special chain gravity anchor 100. The chain gravity anchor 100 comprises a plurality of gravity anchors 31, so that the contact area between the gravity anchor 31 and the river bed can be increased, the friction between the gravity anchor 31 and the river bed can be increased, and the gravity anchor 31 is effectively prevented from drifting. In addition, the main body portion 311 and the extension portion 312 of the gravity anchor 31 meet the corresponding structural design, which can make the single gravity anchor 31 provide good anchoring effect, and at the same time can facilitate the steel wire rope 32 penetration in the through hole 313 to connect a plurality of gravity anchors 31 into the chain gravity anchor 100, so that the chain gravity anchor 100 as a whole has good anchoring effect, and thus can anchor the reef blasting ship 25 well.

By blasting in the center area of the open caisson foundation to form the center rock platform 3, the bearing capacity of the substrate hard rock can be fully utilized, which greatly reduces the amount of blasting rock and concrete pouring and saves economic costs. In addition, the side of the central rock platform 3 and the outer side slope 5 form an inverted trapezoidal structure space, which enlarges the water flow section and slows down the water flow, greatly reducing the impact of water scouring on the open caisson structure, and at the same time, the enlarged structure space makes it more convenient for the subsequent slag cleaning.

In addition, the embodiment adopts the means of blasting in different areas and times, and when charging in the third area 23, using an energy dissipation composite cushion layer, which can effectively reduce the damage of explosion shock waves to the rock layer at the bottom of the pit, and can form a flatter blasting bottom compared with the general continuous charging structure, which is convenient for the subsequent lowering and leveling of the open caisson construction, and speed up the connection of processes.

The underwater blasting construction method for embedded open caisson deep water foundation provided by the embodiment has the characteristics of safe and reliable structure, low cost, and fast construction speed, especially suitable for underwater blasting construction of exposed hard rock foundation in deep water. By designing a reliable foundation structure and optimizing the blasting plan reasonably, it has important practical significance for on-site construction quality, safety, and cost control. It can solve the problems of insufficient utilization of rock bearing capacity, large excavation volume, and long process connection time in the prior art.

It is to be understood that the above description is intended to be illustrative, and not restrictive. Many embodiments and many applications other than the examples provided will be apparent to those skilled in the art upon reading the above description. Therefore, the scope of the present teachings should not be determined by reference to the above description, but should be determined by reference to the entire scope of the attached claims and their equivalents. For comprehensive purposes, all articles and references, including patent applications and announcements, are incorporated by reference in this article. Omitting any aspect of the disclosed subject matter in the aforementioned claims is not intended to abandon the subject matter, nor should it be considered that the inventor did not consider the subject matter as part of the disclosed invention subject matter.

## Claims

1. An underwater blasting construction method for embedded open caisson deep water foundation, **characterized in that** it includes the following steps:
Scan and measure underwater topography to determine a construction area; the construction area comprises a first area, a second area and a third area; the upper surfaces of the first area and the second area are the original seabed surface, the second area surrounds outside the first area, the bottom surface of the second area is lower than the bottom surface of the first area, and the third area is located below the second area;
Make a chain gravity anchor; the chain gravity anchor comprises a steel wire rope and a plurality of gravity anchors; the gravity anchor comprise a main body portion, an extension portion and a through hole penetrating through the extension portion along a first direction; in the first direction, two ends of the extension portion respectively protrude from two ends of the main body portion, and the total length of the extension portion protruding from the main body portion is longer than or equal to the length of the main body portion; in a second direction, two ends of the main body portion respectively protrude from two ends of the extension portion, the total length of the main body portion protruding from the extension portion is longer than or equal to the length of the extension portion, and the second direction is perpendicular to the first direction; the steel wire rope is sequentially threaded through the through holes of the gravity anchors, and the gravity anchors are connected through the steel wire rope;
Install the chain gravity anchor;
Tow the reef blasting ship to the construction area by using a tugboat;
Anchor the reef blasting ship; at least one anchor cable of the reef blasting ship is docked with a floating cable of the chain gravity anchor;
Sequentially carry out the steps of drilling, charging, blasting and slag cleaning in the first area, exposing the upper surface of a central rock platform;
Sequentially carry out the steps of drilling, charging, blasting and slag cleaning in the second area, exposing part of the side surface of the central rock platform and part of the surface of an outer side slope; the diameter of the central rock platform gradually increases from top to bottom, while the diameter of the outer side slope gradually decreases from top to bottom;
Sequentially carry out the steps of drilling, charging, blasting and slag cleaning in the third area, exposing the remaining side surface of the central rock platform, the remaining surface of the outer side slope and the surface of an annular groove; the inner ring of the annular groove is connected to the central rock platform, and the outer ring of the annular groove is connected to the outer side slope; when charging in the third area, setting an energy dissipation composite cushion layer at the bottom of a blasting hole; wherein the steps of drilling, charging and blasting which are sequentially carried out in the first area, the second area and the third area are realized through the reef blasting ship;
Retract the chain gravity anchor by using the floating cable.

2. The underwater blasting construction method for embedded open caisson deep water foundation according to claim 1, **characterized in that** between the step of making a chain gravity anchor and the step of installing the chain gravity anchor, it further comprises: calculate parameters; according to the coordinates of more than two control points provided by the design, collect and calculate the construction positioning parameters through RTK connecting a special handbook; check the coordinates of the control points, and after confirming that the coordinates are correct, the RTK can be put into the positioning construction of the reef blasting ship.

3. The underwater blasting construction method for embedded open caisson deep water foundation according to claim 2, **characterized in that** between the step of towing the reef blasting ship to the construction area by using a tugboat and the step of anchoring the reef blasting ship, it further comprises:
Install two RTK instruments at a fixed position of the reef blasting ship, measure relative coordinates of the fixed position, and calculate by using offshore construction positioning software to obtain real-time accurate position data of the reef blasting ship, wherein the accurate position data comprises water surface elevation;
Connect the two RTK instruments to a working computer, and the offshore construction positioning software can display the position of the reef blasting ship;
Import construction drawing coordinates to obtain the position information of the reef blasting ship and the construction drawing, so as to realize the accurate positioning of the reef blasting ship.

4. The underwater blasting construction method for embedded open caisson deep water foundation according to claim 3, **characterized in that** in the step of anchoring the reef blasting ship, four anchors are thrown outside the construction area to anchor the reef blasting ship according to the position information of the construction drawing; and the two anchors are thrown into a crossed figure-eight shape at each front and rear of the reef blasting ship, two naval anchors are used on the near shore side for anchoring, the naval anchors are sent to a first predetermined position for anchoring by an anchor boat, and two chain gravity anchors are used on the channel side for mooring.

5. The underwater blasting construction method for embedded open caisson deep water foundation according to claim 4, **characterized in that** the mass of the naval anchor is 3 tons and the mass of the chain gravity anchor is 40 tons.

6. The underwater blasting construction method for embedded open caisson deep water foundation according to claim 4, **characterized in that** the length of the horizontal projection of the anchor cable of each of the four anchors is 150m, and the angle of the cable of the four anchors is 45° to the centerline of the reef blasting ship.

7. The underwater blasting construction method for embedded open caisson deep water foundation according to claim 4, **characterized in that** the reef blasting ship is moved to a drilling position by twisting through an anchor machine, and the anchor cables of the four anchors are tightened to stabilize the reef blasting ship at the drilling position.

8. The underwater blasting construction method for embedded open caisson deep water foundation according to claim 1, **characterized in that** in the step of anchoring the reef blasting ship, an extending direction of a bow-stem line of the reef blasting ship is consistent with the direction of the tide.

9. The underwater blasting construction method for embedded open caisson deep water foundation according to claim 1, **characterized in that** in the step of installing the chain gravity anchor, the chain gravity anchor is lifted to a designated coordinate position of the construction area for installation by using a 100T floating crane vessel.

10. The underwater blasting construction method for embedded open caisson deep water foundation according to claim 9, **characterized in that** the chain gravity anchor has at least two hanging rings, the floating crane vessel hooks one of the hanging ring to slowly lower the chain gravity anchor to a second predetermined position, the other one of the hanging ring fixes the floating cable and is slowly lowered in cooperation with the floating crane vessel, and is finally placed at the second predetermined position; the other end of the floating cable is tied to a floating tube.
